# EUROPEAN PATENT APPLICATION

(11) **EP 4 819 564 A1**
(43) Date of publication of application: **07.10.2026**
(21) Application number: 26156318.3
(22) Date of filing: 04.02.2026
(51) Int. Cl.: H04L 41/50, H04L 9/40

(54) **NETWORK ANALYSIS APPARATUS AND NETWORK ANALYSIS METHOD**

(30) Priority: 04.04.2025 JP 2025062709
(71) Applicant: Hitachi, Ltd., Tokyo 100-8280 (JP)
(72) Inventor: SAKATA, Kosei, Tokyo, 1008280 (JP); OGURA, Takashi, Tokyo, 1008280 (JP); MATSUMOTO, Noritaka, Tokyo, 1008280 (JP); TAKEMOTO, Satoshi, Tokyo, 1008280 (JP)
(74) Representative: MERH-IP Matias Erny Reichl Hoffmann Patentanwälte PartG mbB

(57) **Abstract**

A network analysis apparatus collates operation data indicating operation of a control system in operation with each standard requirement indicated by standard requirement information indicating a standard requirement to be satisfied by the control system, and specifies a pending requirement for which a determination of compliance with the standard requirement is to be deferred. The apparatus acquires, from a pre-defined information source related to the pending requirement, additional information which is information that satisfies a requirement defined as potentially necessary to resolve the pending requirement, and determines, based on the additional information, the compliance with the standard requirement for the pending requirement.

## Description

### CROSS-REFERENCE TO PRIOR APPLICATION

This application relates to and claims the benefit of priority from Japanese Patent Application number 2025-062709, filed on April 4, 2025 the entire disclosure of which is incorporated herein by reference.

### BACKGROUND

The present invention relates generally to network analysis.

Control systems constituting important infrastructures are operated in fields having a high degree of influence on the real world, such as electric power, gas, and water supply systems, as well as manufacturing plants and transportation systems that support social infrastructure. Such a control system is required to operate continuously. Therefore, if the control system is stopped or performance of the control system deteriorates by any chance, a serious risk may be posed in terms of safety and social impact. Therefore, in a cybersecurity countermeasure for such a control system, it is desired to perform security evaluation and policy compliance auditing while minimizing the impact of the countermeasure itself on the control system and maintaining continuous operation thereof.

On the other hand, in a so-called information system (typically, an office IT system or the like), a method such as active scanning or penetration testing is widely used to evaluate a risk of communication between a client (for example, a personal computer of a user) and a server. In such an information system, even if a target under evaluation is temporarily stopped, there is a low possibility of directly leading to a serious accident or stop of a large-scale social infrastructure. In addition, system isolation and switching to a redundant system when a failure occurs are relatively easy, and even in the worst case, it is often possible to quickly recover by backup or recovery means. Therefore, it can be said that it is relatively easy to accept a risk associated with the use of an active method in the security evaluation and policy compliance auditing of the information system.

On the other hand, in the case of performing the active scanning on the control system, an unexpected communication load may be applied by intentionally generating traffic, or an aggressive packet may be transmitted to a control apparatus or network equipment. As a result, there is a possibility that the control system is temporarily stopped, the performance of the control system deteriorates, or a control command is not delivered, which may result in a serious impact such as malfunction or data loss. In particular, in an important infrastructure in actual operation, it is difficult to easily tolerate the risk of the active scanning because even a momentary stoppage causes extremely large human and economic impacts. Therefore, in the control system, there is a strong demand for a method capable of performing the security evaluation and policy compliance auditing while maintaining continuous operation without changing the operation of the system as much as possible.

As a related art which is related to passive monitoring that can replace the above-described active scanning, for example, a technology disclosed in JP 2021-117873 A has been proposed. JP 2021-117873 A mainly discloses a process of checking policy compliance of output data in application development, and proposes a method of sequentially adding or modifying policies in cooperation with a data administrator (for example, summary).

### SUMMARY

JP 2021-117873 A includes a mechanism that monitors whether output data of an application conforms to a predetermined policy and prompts a developer or a data administrator to take an action in a case where omissions or deficiencies are present. Meanwhile, the related art considers application development of the information system, and does not assume operation of a large-scale control system that is required to operate continuously. In practice, determination processing described in JP 2021-117873 A is a serial type flow in which processing results are sequentially transferred from a first determination unit to a second determination unit and from the second determination unit to a third determination unit. In the flow, it is assumed that data and policy information are prepared in advance, and there is no description about stepwise reevaluation performed based on additional data acquired from the system in operation. Therefore, it can be said that a method of acquiring supplementary information while deferring determination for some of the requirements and determining final compliance over a plurality of stages in a control system prioritizing continuous operation is not sufficiently disclosed.

Therefore, the present invention has been made in view of the above problems, and an object of the present invention is to provide a technology capable of monitoring a data flow in a system to be evaluated by passive monitoring and evaluating policy compliance in real time without affecting operation of the system.

A network analysis apparatus according to an aspect of the present invention collates operation data indicating operation of a control system in operation with each standard requirement indicated by standard requirement information indicating a standard requirement to be satisfied by the control system, and specifies a pending requirement for which a determination of compliance with the standard requirement is to be deferred. The apparatus acquires, from a pre-defined information source related to the pending requirement, additional information which is information that satisfies a requirement defined as potentially necessary to resolve the pending requirement, and determines, based on the additional information, the compliance with the standard requirement for the pending requirement.

According to the present invention, it is possible to monitor a data flow in a system to be evaluated by passive monitoring and evaluate policy compliance in real time without affecting operation of the system. Problems, configurations, and effects other than those described above will be clarified by the following description of embodiments. In addition, the embodiments described in the present specification are merely examples, and various changes or modifications can be made without departing from the gist of the present invention.

### BRIEF DESCRIPTION OF THE DRAWINGS

FIG. 1 is a block diagram illustrating a hardware configuration example of a network analysis apparatus according to a first embodiment;
FIG. 2 is a block diagram illustrating a functional configuration example of the network analysis apparatus according to the first embodiment;
FIG. 3 is a diagram illustrating a data configuration example of a passive information database according to the first embodiment;
FIG. 4 is a diagram illustrating a data configuration example of a regulatory compliance condition database according to the first embodiment;
FIG. 5 is a diagram illustrating a configuration example of a handling flow table according to the first embodiment;
FIG. 6 is a flowchart in a first determination unit according to the first embodiment;
FIG. 7 is a flowchart in a second determination unit according to the first embodiment;
FIG. 8 is an explanatory diagram illustrating an example of a screen configuration displayed on a display device according to the first embodiment;
FIG. 9 is a block diagram illustrating a functional configuration example of a network analysis apparatus according to a second embodiment;
FIG. 10 is a flowchart in a second determination unit according to the second embodiment; and
FIG. 11 is an explanatory diagram illustrating an example of a screen configuration displayed on a display device according to the second embodiment.

### DETAILED DESCRIPTION

In the following description, a "processor" is an arithmetic device and may be one or more processor devices. At least one processor device may typically be a microprocessor device such as a central processing unit (CPU), and may also be another type of processor device such as a graphics processing unit (GPU). At least one processor device may be a single core or a multi-core. At least one processor device may be a processor core. At least one processor device may be a processor device in a broad sense, such as a hardware circuit (for example, a field-programmable gate array (FPGA), a complex programmable logic device (CPLD), or an application specific integrated circuit (ASIC)) that executes a part of or the entire processing.

In addition, in the following description, a "storage device" may be one or more persistent storage devices or non-persistent storage devices that are an example of one or more memory devices. Typically, the persistent storage device may be a non-volatile storage device, and specifically, for example, may be a hard disk drive (HDD), a solid state drive (SSD), a read only memory (ROM), or a non-volatile memory express (NVMe) drive. The non-persistent storage device may typically be a volatile memory device, and specifically corresponds to, for example, a random access memory (RAM).

In addition, in the following description, information from which an output is obtained for an input may be described with an expression such as a "vvv table" or a "vvv database". However, the information may be data of any structure (for example, structured data or unstructured data), or may be a learning model that generates an output for an input, the learning model being represented by a neural network, a genetic algorithm, or a random forest. Therefore, the "vvv table" and the "vvv database" can be referred to as "vvv information". In the following description, a configuration of each database or table is an example, and one database or table may be divided into two or more databases or tables, or all or some of two or more databases or tables may be one database or table.

In addition, in the following description, processing may be described with a "program" as a subject. However, the subject of the processing may be the CPU (alternatively, a device such as a controller including the processor) since the program is executed by the processor such as the CPU to execute predetermined processing appropriately using the storage device and/or an interface device. The program may be installed in an apparatus such as a computer, from a program source. The program source may be, for example, a program distribution server or a computer-readable recording medium (for example, a non-transitory computer-readable recording medium). In the following description, two or more programs may be implemented as one program, or one program may be implemented as two or more programs.

In addition, in the following description, in a case where elements of the same type are described without being distinguished, common portions of reference numerals are used, and in a case where elements of the same type are described while being distinguished, reference numerals or identifiers of the elements may be used.

### FIRST EMBODIMENT

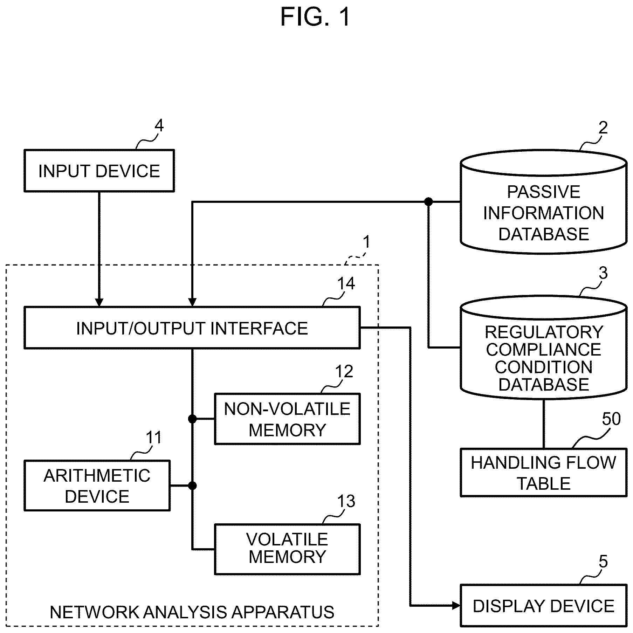

A network analysis apparatus (information processing apparatus) according to a first embodiment will be described with reference to FIGS. 1 to 8.

FIG. 1 is a block diagram illustrating an example of a hardware configuration of a network analysis apparatus 1 according to the first embodiment.

The network analysis apparatus 1 may be an example of a computer, and is implemented by, for example, a computer including an arithmetic device 11, a non-volatile memory 12, a volatile memory 13, an input/output interface 14, and other peripheral circuits. Such pieces of hardware operate software in cooperation with each other to implement a plurality of functions.

The arithmetic device 11 includes a processor, and is implemented by, for example, a central processing unit (CPU), a micro processing unit (MPU), and/or a digital signal processor (DSP).

Furthermore, the non-volatile memory 12 includes, for example, a read only memory (ROM) used as a main storage device, a flash memory used as an auxiliary storage device, a hard disk drive, and the like. The volatile memory 13 includes, for example, a random access memory (RAM) used as a main storage device.

The network analysis apparatus 1 is a computer system implemented on a single physical computer or on a plurality of logical or physical computers, and may operate in separate threads on the same computer or on a virtual computer constructed on a plurality of physical computer resources.

An application specific integrated circuit (ASIC), a field programmable gate array (FPGA), or the like can also be used as the arithmetic device 11.

For example, a program that can be executed by the arithmetic device 11 and data used at the time of executing the program are stored in the flash memory, the hard disk drive, and the like, which correspond to the non-volatile memory 12. That is, the non-volatile memory 12 is a storage medium (storage device) from which a program for implementing functions of the present embodiment can be read. Furthermore, for example, an invariable program (for example, basic input/output system (BIOS)) and the like are stored in the ROM or the like, which corresponds to the non-volatile memory 12.

For example, the RAM or the like which corresponds to the volatile memory 13 is a storage medium (storage device) that temporarily stores the program executed by the arithmetic device 11, data used at the time of executing the program, and a signal input from the input/output interface 14.

The arithmetic device 11 loads the program stored in the non-volatile memory 12 onto the volatile memory 13 and performs computation. The arithmetic device 11 executes predetermined arithmetic processing on data taken in from the input/output interface 14, the non-volatile memory 12, and the volatile memory 13 according to the program.

The input device 4 and the display device 5 are connected to the input/output interface 14. The input/output interface 14 is an interface device that receives an input from an operator and outputs a program execution result in a format that can be visually recognized by the operator. A keyboard, a mouse, and the like are examples of the input device 4. For example, a device including a display screen such as a liquid crystal monitor, a printer, and the like are examples of the display device 5.

Furthermore, the input/output interface 14 may further have a function as a network interface device that controls communication with an external apparatus (for example, a control system to be evaluated, which is a target whose operation data and the like are to be acquired) according to a predetermined protocol. In such a case, a network serving as a communication path may be, for example, a wired local area network (LAN), a wireless LAN, a wide area network (WAN), a mobile phone network, or the like, but is not limited thereto.

Here, examples of the mobile phone network or the like include a general wired or wireless public line network such as a fifth-generation mobile communication system that enables "massive simultaneous connections" and "ultra-low latency", which is so-called 5th Generation (5G). It is a matter of course that, in the future, a new mobile phone system subsequent to 5G may be further used.

Furthermore, data exchange between the network analysis apparatus 1 and another system (the control system or the like) via the input/output interface 14 may be performed according to, for example, a protocol of an application programming interface (API).

In addition, the network analysis apparatus 1 is connected to a passive information database 2 and a regulatory compliance condition database 3 via the input/output interface 14. The passive information database 2 and the regulatory compliance condition database 3 are databases storing predetermined data. The regulatory compliance condition database 3 may include a handling flow table 50.

The data stored in the passive information database 2 and the regulatory compliance condition database 3 is described in detail below. The passive information database 2 and the regulatory compliance condition database 3 may be stored in the non-volatile memory 12 and/or the volatile memory 13.

In the present embodiment, information used by the network analysis apparatus 1 may be expressed by any data structure without depending on the data structure. For example, an appropriately selected data structure from a table, list, database, or queue may store the information.

An input unit of the input/output interface 14 converts a data input signal from the input device 4 and signals input from the passive information database 2 and the regulatory compliance condition database 3 into data that can be computed by the arithmetic device 11. Further, an output unit of the input/output interface 14 generates an output signal according to a computation result of the arithmetic device 11, and outputs the signal to the display device 5.

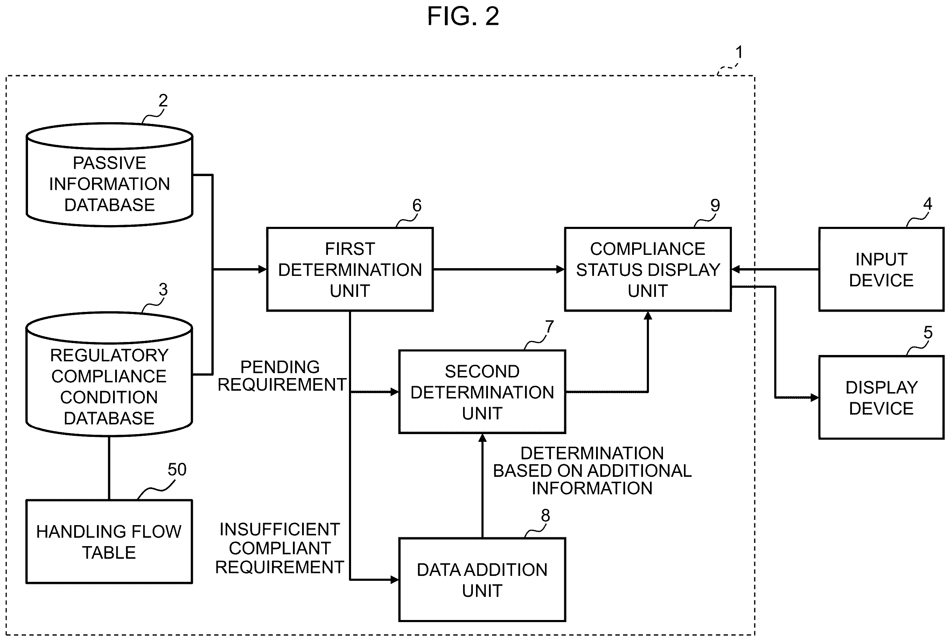

FIG. 2 is a block diagram illustrating a functional configuration of the network analysis apparatus 1 according to the first embodiment.

The network analysis apparatus 1 includes functional modules including the passive information database 2, the regulatory compliance condition database 3, a first determination unit 6, a second determination unit 7, a data addition unit 8, a compliance status display unit 9, and the like.

The modules are implemented as software programs on the hardware configuration of the arithmetic device 11 and the like illustrated in FIG. 1. As an example, the network analysis apparatus 1 may be configured to operate on a Linux operating system (OS), and each functional module may be independently operated using a container technology (such as Docker) (Linux is a registered trademark).

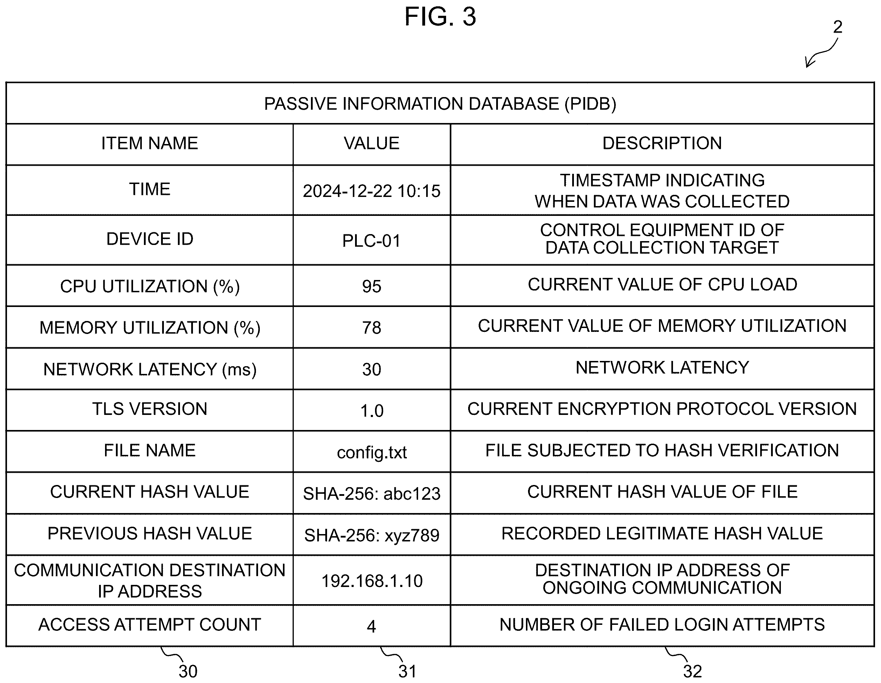

In the passive information database 2 among the above modules, the operation data such as a network traffic naturally occurring during operation of the control system, log information, and a CPU utilization is recorded. FIG. 3 illustrates a specific example thereof.

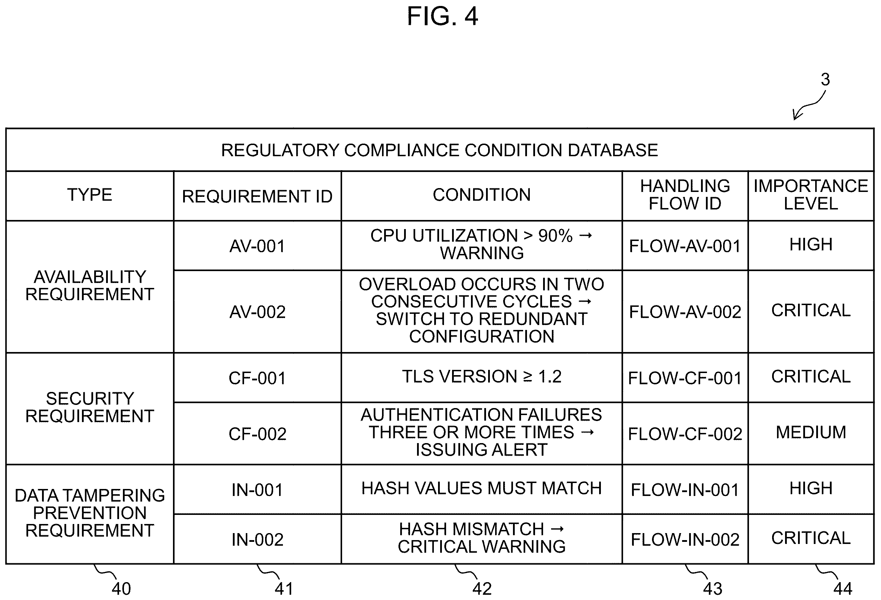

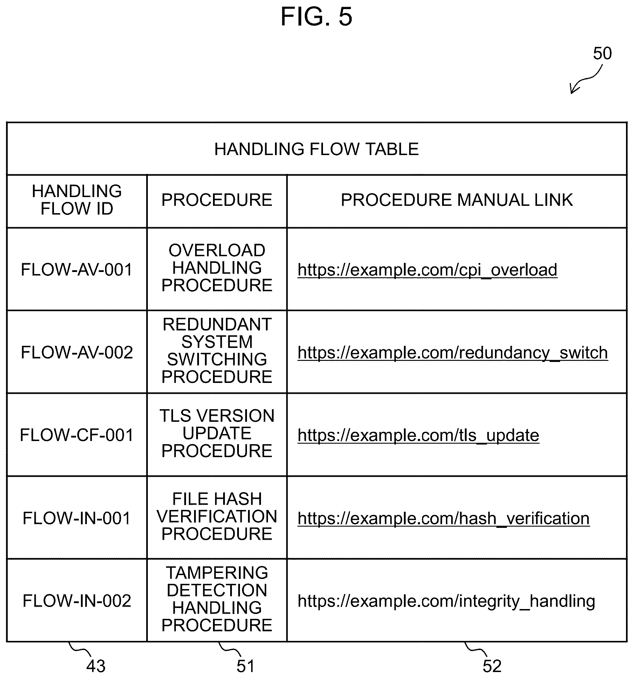

In addition, in the regulatory compliance condition database 3, rules and reference values to be followed during operation of the control system, such as internal regulations of a company that operates the control system, international standards, and various industry guidelines, are registered. Details of conditions related to such regulations or standard requirements are illustrated in FIG. 4. Further, FIG. 5 illustrates an example of the handling flow table 50 referred to in the database.

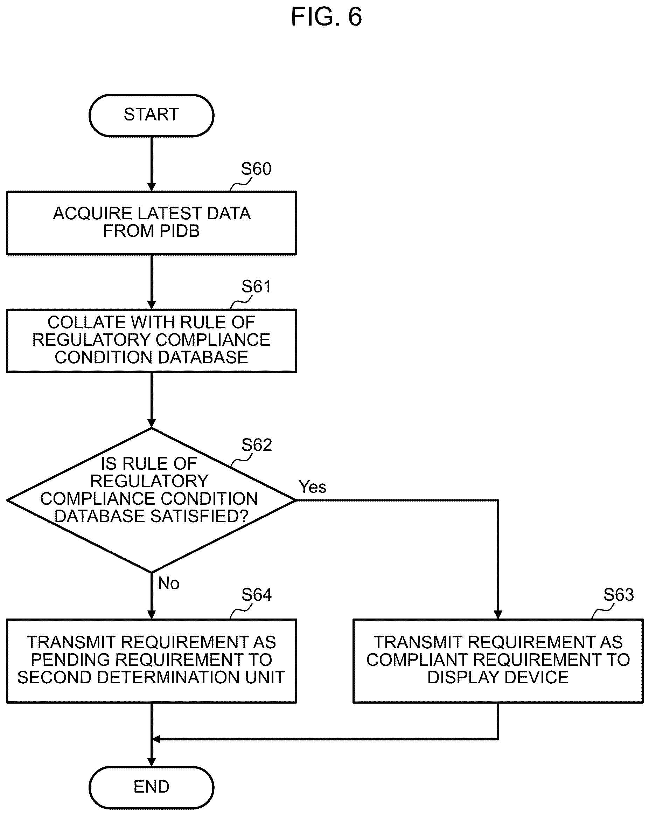

The first determination unit 6 is a module at an initial stage, the module determining whether or not the control system satisfies a requirement to be satisfied (determination of compliance) by referring to the information in the passive information database 2 and the regulatory compliance condition database 3. In the determination, as illustrated in the flowchart of FIG. 6, an item for which it is difficult to perform determination due to lack of data or the like is treated as being "pending".

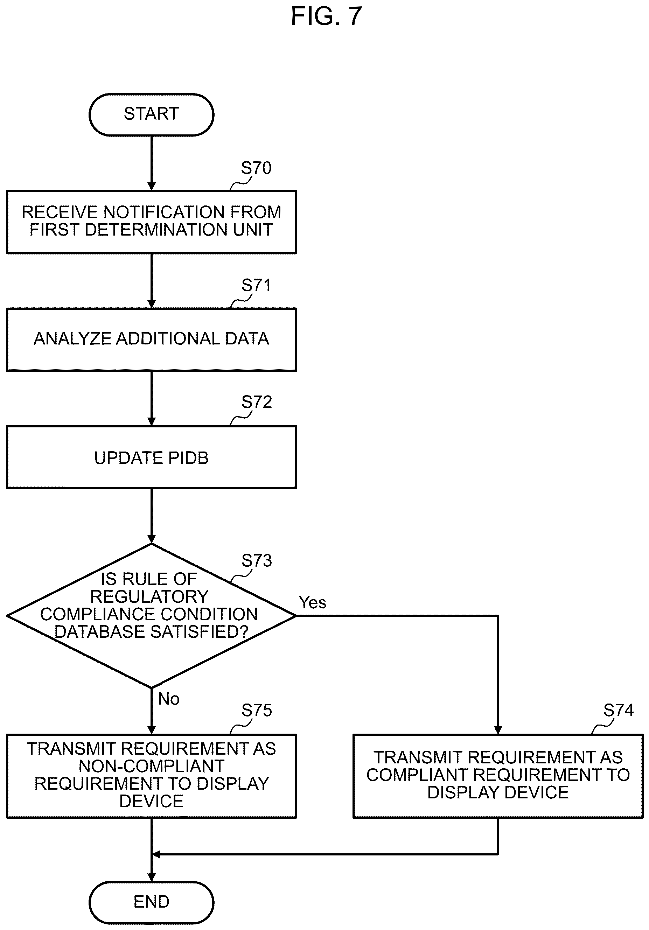

Meanwhile, the second determination unit 7 is a module for performing final determination of compliance with the standard requirement and risk evaluation by utilizing additional information obtained from the data addition unit 8 for the item (that is, a pending requirement) for which a determination is to be deferred in the first determination unit 6. As illustrated in the flowchart of FIG. 7, the second determination unit 7 determines again the compliance for the pending requirement, and determines "whether or not the requirement is satisfied" when sufficient information is obtained.

In addition, the data addition unit 8 functions to acquire the additional information which is information defined as potentially necessary to resolve the pending requirement. For example, the data addition unit 8 collects a wider range of logs or more detailed logs related to the operation data of the control system as the additional information, and acquires the operation data (passive data acquired by passive monitoring) in order to grasp an event occurring only in a specific time period. In the present embodiment, the data addition unit 8 executes processing such as extending a collection operation of the passive information database 2 in response to a request from the first determination unit 6 or the second determination unit 7.

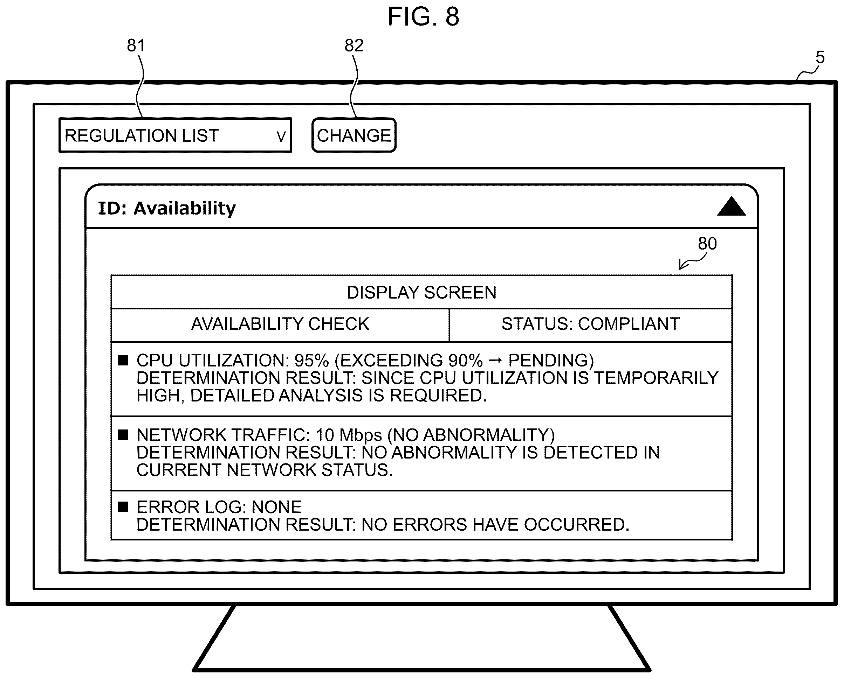

The compliance status display unit 9 integrates final determination results for the respective requirements (the standard requirement related to the pending requirement) obtained by the first determination unit 6 and the second determination unit 7, and outputs the integrated result to the display device 5 (see FIG. 1). FIG. 8 illustrates an example of a screen configuration displayed on the display device 5 at this time. In a case where the pending requirement exists, the pending requirement is displayed as a "pending" state, and a reevaluation result after acquisition of the additional information is also reflected in real time.

FIG. 3 is a diagram illustrating a data configuration example of the passive information database 2.

In the passive information database 2, records including respective values such as an item name indicating a type of the operation data, a value of the operation data, and a description are stored as time-series operation data. Such operation data has a configuration in which information such as a network traffic log, an error log, and a resource usage status of the CPU, the memory, and the like is stored in time series for each date and time of acquisition or observation (a value of an item name "time"). In the present embodiment, the operation data of the control system is acquired and recorded as needed, and can be retrieved at the time of determination processing executed by the first determination unit 6 and the second determination unit 7. For example, threshold determination such as a determination as to "whether or not a CPU utilization exceeds a certain value" or a determination as to "whether or not a network bandwidth is within an allowable range" is also performed with reference to the operation data recorded in the passive information database 2. Here, it is assumed that the following information obtained from the control system is accumulated as the operation data in time series (for example, every second).

First, as an example of recording a CPU utilization log, data such as "2024-12-22 10:15:00, CPU=80%" and "2024-12-22 10:15:01, CPU=92%" corresponds to the operation data. In this case, for the item "CPU utilization", in a case where a threshold defined in the standard requirement is, for example, "90%", a "caution state" is determined in a case where a value of the CPU utilization indicated by the operation data exceeds the threshold "90%", and a "warning state" is determined in a case where the caution state continues for 10 seconds or more (a determination criterion described below).

In addition, as the network traffic log, for example, the number of transmitted/received bytes and the number of packets for each port number are recorded. Such a network traffic log is, for example, a value such as "2024-01-10 10:00:00, TotalTraffic=8MBPs, Port443=2MBPs, Port80=6MBPs".

The error log is, for example, a collection of event logs (a communication error, a sensor abnormality, and the like) reported from the control system. Such an error log is, for example, a value such as "2024-01-10 10:00:05, DeviceID=XYZ, ErrorCode=E203".

The pieces of operation data are stored in the auxiliary storage device for about 30 days, and are sequentially deleted or archived from old data. Processing of determining the compliance with the standard requirement is executed by referring to data in a target period among pieces of data for the latest 30 days as necessary.

FIG. 4 is a diagram illustrating a data configuration example of the regulatory compliance condition database 3.

The regulatory compliance condition database 3 includes values such as a type 40 (for example, "availability requirement", "security requirement", and "data tampering prevention requirement") of a specific requirement such as a regulation, a guideline, or an internal rule to be satisfied by the control system, a requirement ID 41 indicating the requirement, a condition 42 that specifically defines the requirement, a handling flow ID (which may correspond to a source of acquisition of the additional information) indicating a handling method when the condition is not satisfied, that is, when there is a doubt as to the compliance, and an importance level of the condition. The value in the "condition" column may include a reference value (threshold) and a check item for making a determination regarding the condition.

Furthermore, for the "availability requirement" among the above requirements, for example, conditions such as "a state in which the CPU utilization exceeds 90% does not continue for 10 seconds or more" and "a network band utilization does not exceed 80 MBPs" can be defined. In addition, a condition that "the number of error logs within one hour does not exceed 10" can be defined for a requirement of the number of error logs. In addition, a condition such as "a log from a specific important control apparatus is collected at least once every 30 seconds" can be defined for a requirement regarding a monitoring interval. Any one of the records in the handling flow table 50 illustrated in FIG. 5 is associated with each of the requirements using the handling flow ID as a key. For example, a handling flow ID "FLOW-AV-001" related to "CPU utilization > 90% → warning" of a requirement ID "AV-0001" is associated with an "overload handling procedure" in the "procedure" column among the records of the handling flow table 50. In the "overload handling procedure", for example, an instruction to "prompt collection of detailed logs in a case where the CPU utilization exceeds 90% continuously for 10 seconds or more" is described.

Hereinafter, an example of processing executed in the present embodiment will be described.

FIG. 6 is a diagram illustrating a determination flow for the availability requirement and an error log status by the first determination unit 6.

The first determination unit 6 acquires, for example, the CPU utilization log and the network traffic log for latest 1 minute as the operation data from the passive information database 2 (step S60). The CPU utilization log in the operation data acquired here is, for example, CPU logs from "10:00:00" to "10:00:59" on "2024-01-10". The first determination unit 6 counts the operation data obtained here, and specifies, for example, that a duration for which the CPU utilization is equal to or higher than "90%" is "15 seconds".

Subsequently, the first determination unit 6 compares the value (for example, a duration for which a predetermined CPU utilization is maintained) obtained in the above step S60 with the availability requirement defined in the regulatory compliance condition database 3, and determines whether or not the value exceeds a defined value (for example, a state in which the CPU utilization exceeds 90% continues for 10 seconds) (step S61). For example, in a case where the CPU utilization exceeds 90% continuously for 15 seconds, the first determination unit 6 determines that the above requirement is unsatisfied (corresponding to a warning).

As described above, the first determination unit 6 determines whether or not the corresponding operation data is compliant with each requirement of the regulatory compliance condition database 3 (step S62), sets a flag as the "pending requirement" for the requirement determined to be unsatisfied according to a determination result, and transmits information indicating the "pending" state to the second determination unit 7 (step S62: No → step S64). Information indicating "warning" or "abnormality" is transmitted according to an unsatisfied content of the requirement.

For the above "pending requirement", further analysis of the traffic log and a memory utilization status may be necessary in order to specify a detailed cause of the "pending" state. Therefore, the first determination unit 6 transmits a notification regarding the "pending requirement" to the second determination unit 7, so that the additional information necessary for determination of the compliance (whether or not the requirement is satisfied), such as "the extent of network bandwidth usage during a CPU overload period" and "whether a large number of sensor errors have occurred during the same time period", is specified.

On the other hand, in a case where the corresponding operation data is compliant with the item of each requirement in the regulatory compliance condition database 3 in step S62, the first determination unit 6 sets a flag as a "compliant item" for the item that satisfies the requirement, and transmits information indicating "satisfied" to the second determination unit 7 (step S62: Yes → step S63).

FIG. 7 is a diagram illustrating a redetermination flow for the pending requirement by the second determination unit 7.

When the pending requirement is received from the first determination unit 6, reevaluation is performed in the following steps. First, the second determination unit 7 requests the data addition unit 8 for necessary information such as "a memory utilization log at the same time as CPU overload" and "detailed network traffic statistics (by port and by protocol) for the period" (step S70).

Subsequently, the second determination unit 7 imports the additional information acquired from the data addition unit 8 to the passive information database 2, analyzes the additional information together with the latest log (step S71), and updates the passive information database 2 with the result (step S72). For example, new facts such as that "the memory utilization is at most 70% and has a margin" and that "the network traffic is about 10 MBPs and is not saturated" are confirmed.

Taking the analysis result of step S71 described above as an example, the second determination unit 7 can specify that an event that is determined not to satisfy the availability requirement that "a state in which the CPU utilization exceeds 90% continues for 10 seconds" by the first determination unit 6 was caused by "a temporary peak in computation processing". In such a case, the second determination unit 7 determines that the standard requirement defined in the regulatory compliance condition database 3 is satisfied for the pending requirement, that is, the pending requirement is the compliant requirement, by analysis based on the additional information (step S73: Yes). In such a situation, for example, a handling flow indicating that "the requirement is considered to be satisfied in a case where no similar peak occurs continuously within 24 hours" can be applied. In this case, the second determination unit 7 can select whether or not to continue log monitoring for one hour again according to the "overload handling procedure" which can be referred to from the handling flow table 50. That is, the acquisition of the additional information can be determined.

In addition, in a case where a result of the reevaluation (step S73) indicates that a state in which the requirement is not satisfied continues, the second determination unit 7 determines "warning" or "abnormality" (non-compliant requirement), or in a case where the additional information is necessary, the second determination unit 7 sets a pending flag again (compliant requirement) and continues the collection of additional data (steps S74 and S75).

FIG. 8 illustrates an example of a screen configuration presented on the display device 5 by the compliance status display unit 9.

In the present embodiment, a status of the requirement and a satisfaction state thereof are displayed in the following format. For example, for the requirement "availability", statuses such as "CPU utilization: 95% (exceeding 90% → pending)", "Determination result: Since CPU utilization is temporarily high, detailed analysis is required", "Network traffic: 10 MBPs (no abnormality)", "Determination result: No abnormality is detected in current network status", "Error log: None", and "Determination result: No errors have occurred" are included in a screen display.

In this manner, the screen displays a list of requirement names and statuses (satisfied/warning/pending/abnormality, etc.), and the user can confirm an acquisition status of the additional data and the progress of reevaluation by clicking the pending requirement. In this example, a message indicating a possibility that the peak of the CPU utilization is a temporary peak and prompting data collection for reevaluation (such as a detailed log of the memory utilization) is also displayed.

As described above, in the present embodiment, by setting a specific numerical value (for example, the threshold such as the CPU utilization of 90%, a network band of 80MBPs, or the like) and incorporating stepwise determination, it is possible to perform accurate regulatory compliance evaluation without applying a load to the control system. Even in a case where temporary overload occurs, the additional information is acquired through the data addition unit 8, and a true problem can be determined by the reevaluation (compliance determination). As a result, it is possible to check the necessary security requirements and availability requirements in stages and finally make a clear determination of whether or not the requirement is satisfied without stopping the control system in operation.

Further, since the details of the pending requirement and the warning item are displayed in real time using the compliance status display unit 9, a system administrator can quickly grasp the current state and take a separate countermeasure (distribution of a process load, equipment reinforcement, review of an operation schedule, etc.) if necessary. Such effects are very useful in ensuring compliance with international standards and internal policies while maintaining stable operation of a large-scale control system.

### SECOND EMBODIMENT

A second embodiment will be described. Here, differences from the first embodiment will be mainly described, and description of common points with the first embodiment will be omitted or simplified.

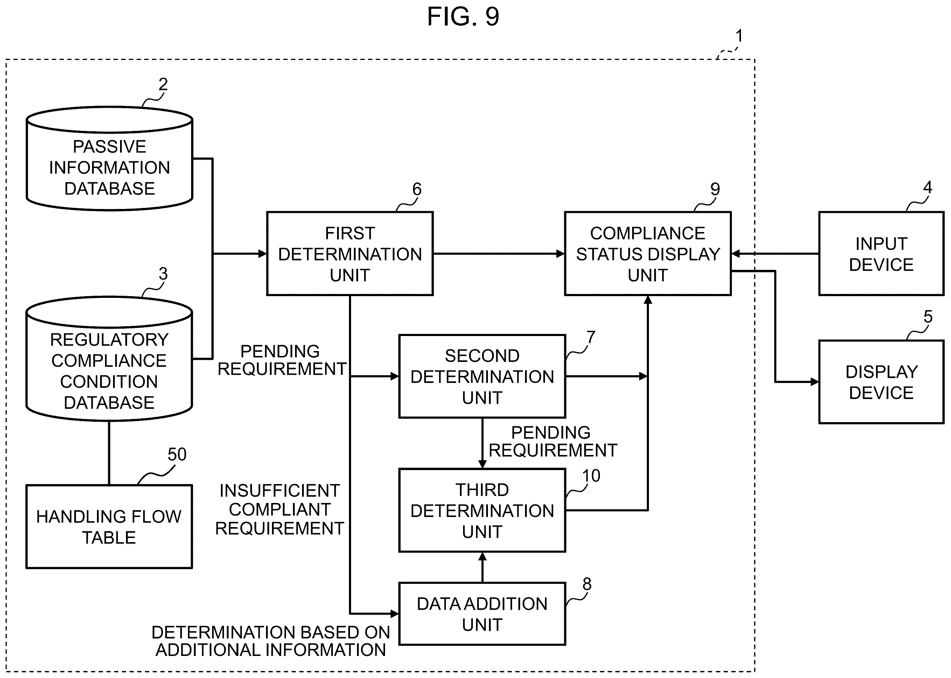

FIG. 9 is a block diagram illustrating a functional configuration example of a network analysis apparatus 1 according to the present embodiment.

In the second embodiment, a third determination unit 10 is newly provided at a subsequent stage of a second determination unit 7. The network analysis apparatus 1 is configured to cope with a complicated evaluation flow.

The third determination unit 10 is a module for finally reviewing a requirement that cannot be completely determined by the second determination unit 7. In the second embodiment, it is assumed that meta information other than normal operation data, such as an external audit log and administrator interview information, can be referred to. As a result, it is possible to make a determination in consideration of an event that cannot be processed by simple numerical comparison or special exceptional handling of a system configuration.

As in the first embodiment, a compliance status display unit 9 has a function of integrating determination results of first to third determination units, which indicate whether or not a requirement is satisfied, and visualizing a final compliance status. In the second embodiment, a screen is prepared to show a progress status of an evaluation flow in three stages (for example, "deferred by the first determination unit", "under reevaluation by the second determination unit", and "under final verification by the third determination unit") to a user in an easy-to-understand manner.

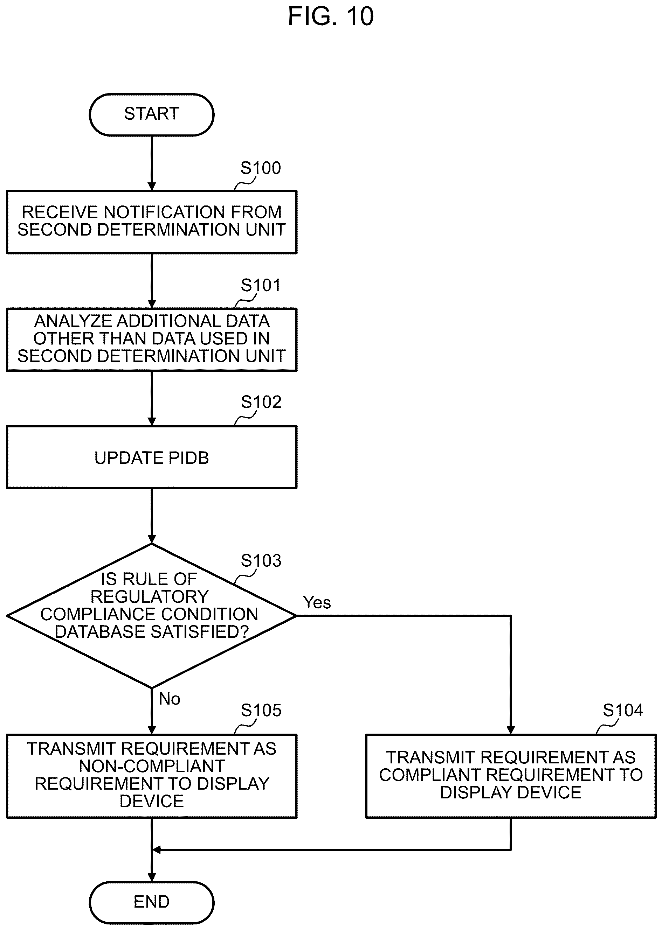

FIG. 10 is a flowchart illustrating an example of processing executed by a data addition unit 8 in the second embodiment.

As compared with the first embodiment, an acquisition range of the additional information is more flexibly controlled, and two-stage data acquisition by the second determination unit 7 and the third determination unit 10 in response to requests is implemented.

Here, the data addition unit 8 receives a notification from the second determination unit 7 or the third determination unit 10, and determines "what additional information is required to evaluate which requirement" (step S100).

In addition, the data addition unit 8 analyzes the log and the meta information, which are required to be additionally acquired, and confirms whether there is no duplication or missing (step S101). Here, for example, "whether or not contents of logs for the same time period, which are acquired a plurality of times, are consistent with each other" is checked, and correction is performed as necessary to maintain consistency.

The data addition unit 8 reflects the analysis result in step S101 in a passive information database 2 (abbreviated as PIDB), and updates data such that the second determination unit 7 and the third determination unit 10 can perform reevaluation (step S102). For example, countermeasures such as extending a log retention period from the past one hour to the past 24 hours, and additionally registering a waveform trend are assumed.

Subsequently, the data addition unit 8 temporarily checks whether or not a rule of a regulatory compliance condition database 3 is satisfied based on the information obtained up to step S102, and in a case where the rule is satisfied, the data addition unit 8 transmits the corresponding requirement to a display device 5 as a "compliant requirement" (step S103: Yes, step S104). On the other hand, in a case where the rule of the regulatory compliance condition database 3 is not satisfied, the data addition unit 8 transmits the corresponding requirement as a "non-compliant requirement" (step S103: No, step S105), and prompts the third determination unit 10 to perform additional verification if necessary. As described above, in the second embodiment, a bypass to the third determination unit 10 is incorporated in addition to the result of the second determination unit 7, so that more precise final determination can be made.

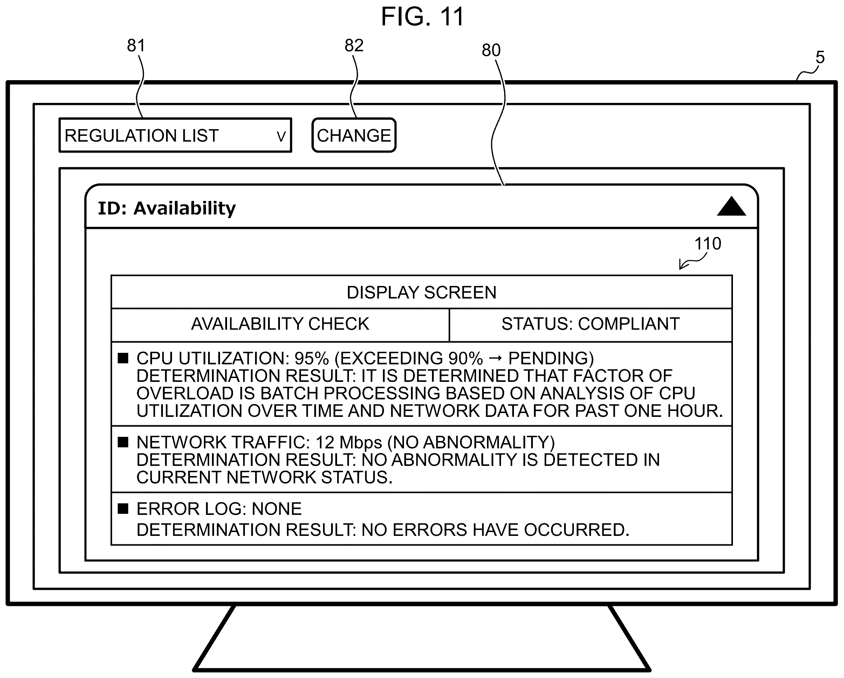

FIG. 11 is an explanatory diagram illustrating an example of a screen configuration displayed on the display device 5 according to the second embodiment.

A screen 80 has a characteristic in which the following additional information is reflected. After it is determined that "CPU utilization: 95% (exceeding 90% → pending)" in the item of the availability check, when it is determined that the "factor of overload is batch processing" based on analysis of the CPU utilization over time and network data for the past one hour by the data addition unit 8, the corresponding requirement is finally determined as the "compliant requirement". On the other hand, in a case where a further suspicious log is found, handover to the third determination unit 10 is performed, and a conclusion is made after an additional process such as "further confirming an external audit log" or "conducting an interview with the administrator".

A "regulation list" button 81 and a "change" button 82 are disposed at an upper part of the screen so that the user can refer to and change the rule of the regulatory compliance condition database 3 as necessary. In the second embodiment, a scene in which some threshold values and necessary log collection periods are adjusted in accordance with an operation status is assumed, and a user having administrator authority can dynamically modify the threshold values and the necessary log collection period on the screen.

In addition, measures are taken to clarify at which stage the determination is made by displaying statuses of three stages in parallel, such as "State: Compliant", "State: Pending", and "State: Additional verification required". As a result, a person in charge of operation can easily grasp whether an event occurring in the system is being deferred by the first determination unit 6, is being reevaluated by the second determination unit 7, or is being reviewed by the third determination unit 10.

According to the present embodiment, in addition to the two-stage evaluation (first and second determination units) of the first embodiment, the third determination unit 10 is further provided, so that more complicated requirements and undetermined elements can be accurately verified. Specifically, there are the following advantages.

First, the third determination unit 10 can appropriately consider "an operation exception that cannot be grasped by normal numerical comparison" by referring not only to an additional log but also to the external audit log, an interview result, and the meta-information such as a system change history.

In addition, the flow of first determination unit 6 → second determination unit 7 → third determination unit 10 can resolve information insufficiencies and unknown events in stages, so that the reason "why the determination as to whether or not the requirement is satisfied has been made" is finally clarified. It is possible to make a more reliable determination as to whether or not the requirement is satisfied by acquiring and analyzing the additional information in stages without forcibly collectively processing the pending requirement.

As described above, even in an environment where continuous operation is required like the control system, it is possible to conduct a stepwise and detailed regulatory compliance evaluation and to further lead a final conclusion by special processing using the third determination unit 10 as necessary. As a result, an excellent effect of comprehensively checking complicated security policies and availability requirements while avoiding system stoppage as much as possible and finally securing safe and stable operation of the system is obtained.

The present invention is not limited to the above-described embodiments (first and second embodiments).

The above description can be summarized as follows. The following summary may include supplementary description of the above description and description of modifications.

A network analysis apparatus (for example, the network analysis apparatus 1) includes a storage device (for example, the non-volatile memory 12 and the volatile memory 13) and a processor (for example, the arithmetic device 11). The storage device stores operation data (for example, data including a value for each item in the passive information database 2) indicating operation of a control system in operation, and standard requirement information (for example, the regulatory compliance condition database 3) which is information indicating a standard requirement to be satisfied by the control system. The processor collates the operation data with each standard requirement indicated by the standard requirement information, and specifies a pending requirement for which a determination of compliance with the standard requirement is to be deferred. The processor acquires, from a pre-defined information source related to the pending requirement, additional information which is information that satisfies a requirement defined as potentially necessary to resolve the pending requirement, and determines, based on the additional information, the compliance with the standard requirement for the pending requirement. As a result, it is possible to monitor a data flow in a system to be evaluated by passive monitoring and evaluate policy compliance in real time without affecting operation of the system.

The arithmetic device may passively collect the operation data in the control system and store the operation data in the storage device. As a result, it is possible to collect and accumulate the operation data by passive monitoring.

In addition, the arithmetic device may acquire the additional information as handling information when handling a situation in which the pending requirement is not compliant with the standard requirement from a storage location of the handling information, the storage location being an information source. As a result, it is possible to accurately and efficiently acquire the additional information such as a procedure manual for compliance with the standard requirement for the pending requirement.

In addition, the arithmetic device may acquire, when acquiring the additional information, the operation data from the storage device or the control system as the information source by expanding a target acquisition period of the operation data related to the pending requirement or increasing data granularity of the operation data to be acquired. As a result, the operation data over a long period of time instead of the operation data over a short period of time, or the operation data in which an observed event is precise is acquired as the additional information, and it is possible to perform the compliance determination while eliminating adverse effects and the like due to so-called outliers.

In addition, the arithmetic device may determine, when acquiring the operation data as the additional information, a type of the additional information necessary for each pending requirement based on a content of the standard requirement, expand the target acquisition period or increase the data granularity of the operation data to be acquired according to the type of the additional information, and acquire the operation data from the storage device or the control system as the information source. As a result, it is possible to accurately and efficiently acquire the additional information different for each pending requirement.

In addition, the arithmetic device may repeatedly execute each of the steps of processing of acquiring the additional information and determining the compliance with the standard requirement for the pending requirement according to the number of pending requirements. As a result, it is possible to appropriately deal with a case where a plurality of pending requirements are specified and efficiently perform the compliance determination for the entire control system to be evaluated.

In addition, for each of the pending requirements, the arithmetic device may repeatedly execute each of the steps of processing of acquiring the additional information and determining the compliance with the standard requirement until a predetermined value indicated by the operation data corresponding to each of the pending requirements reaches a threshold defined in the standard requirement, and integrate compliance determination results related to all the requirements in the standard requirement to specify a compliance status of the control system. As a result, it becomes possible to more strictly and accurately determine the compliance with the standard requirement.

In addition, the storage device may store, as the operation data in the control system, a plurality of types of operation data including at least one of a network traffic, a system log, a memory utilization status, a CPU usage, and an event log. The arithmetic device may specify the pending requirement, acquire the additional information, and determine the compliance for each of the plurality of types of operation data or in combination according to the standard requirement. As a result, it is possible to acquire and use a wide variety of operation data and more accurately determine the compliance with the standard requirement.

In addition, the standard requirement information may include, as information indicating the standard requirement, information according to an item related to an international standard or a security policy (for example, a value corresponding to the item). The arithmetic device may collate, when specifying the pending requirement, the operation data with the information according to the item of the international standard or the security policy indicated by the standard requirement information. The arithmetic device may acquire, when acquiring the additional information, the additional information from the information source pre-defined for the information according to the item of the international standard or the security policy, which is the pending requirement. The arithmetic device may determine, when determining the compliance, the compliance with the standard requirement for the information according to the item of the international standard or the security policy, which is the pending requirement, based on the additional information. As a result, it is possible to specify and acquire, for the control system to be evaluated, an objective and reliable compliance determination result for external disclosure.

## Claims

1. A network analysis apparatus comprising:
a storage device that stores operation data indicating operation of a control system in operation, and standard requirement information which is information indicating a standard requirement to be satisfied by the control system; and
an arithmetic device that collates the operation data with each standard requirement indicated by the standard requirement information, specifies a pending requirement for which a determination of compliance with the standard requirement is to be deferred, acquires, from a pre-defined information source related to the pending requirement, additional information which is information that satisfies a requirement defined as potentially necessary to resolve the pending requirement, and determines, based on the additional information, the compliance with the standard requirement for the pending requirement.

2. The network analysis apparatus according to claim 1, wherein the arithmetic device passively collects the operation data in the control system and stores the operation data in the storage device.

3. The network analysis apparatus according to claim 1, wherein the arithmetic device acquires the additional information as handling information when handling a situation in which the pending requirement is not compliant with the standard requirement from a storage location of the handling information, the storage location being an information source.

4. The network analysis apparatus according to claim 1, wherein the arithmetic device acquires, when acquiring the additional information, the operation data from the storage device or the control system as the information source by expanding a target acquisition period of the operation data related to the pending requirement or increasing data granularity of the operation data to be acquired.

5. The network analysis apparatus according to claim 4, wherein the arithmetic device determines, when acquiring the operation data as the additional information, a type of the additional information necessary for each pending requirement based on a content of the standard requirement, expands the target acquisition period or increases the data granularity of the operation data to be acquired according to the type of the additional information, and acquires the operation data from the storage device or the control system as the information source.

6. The network analysis apparatus according to claim 1, wherein the arithmetic device repeatedly executes each of steps of processing of acquiring the additional information and determining the compliance with the standard requirement for the pending requirement according to the number of pending requirements.

7. The network analysis apparatus according to claim 6, wherein, for each of the pending requirements, the arithmetic device repeatedly executes each of the steps of processing of acquiring the additional information and determining the compliance with the standard requirement until a predetermined value indicated by the operation data corresponding to each of the pending requirements reaches a threshold defined in the standard requirement, and integrates compliance determination results related to all requirements in the standard requirement to specify a compliance status of the control system.

8. The network analysis apparatus according to claim 1, wherein
the storage device stores, as the operation data in the control system, a plurality of types of operation data including at least one of a network traffic, a system log, a memory utilization status, a CPU usage, and an event log, and
the arithmetic device specifies the pending requirement, acquires the additional information, and determines the compliance for each of the plurality of types of operation data or in combination according to the standard requirement.

9. The network analysis apparatus according to claim 1, wherein
the standard requirement information includes, as information indicating the standard requirement, information according to an item related to an international standard or a security policy, and
the arithmetic device collates, when specifying the pending requirement, the operation data with the information according to the item of the international standard or the security policy indicated by the standard requirement information, acquires, when acquiring the additional information, the additional information from the information source pre-defined for the information according to the item of the international standard or the security policy, which is the pending requirement, and determines, when determining the compliance, the compliance with the standard requirement for the information according to the item of the international standard or the security policy, which is the pending requirement, based on the additional information.

10. A network analysis method executed by a computer, the network analysis method comprising:
collating operation data indicating operation of a control system in operation with each standard requirement indicated by standard requirement information which is information indicating a standard requirement to be satisfied by the control system and specifying a pending requirement for which a determination of compliance with the standard requirement is to be deferred;
acquiring, from a pre-defined information source related to the pending requirement, additional information which is information that satisfies a requirement defined as potentially necessary to resolve the pending requirement; and
determining, based on the additional information, the compliance with the standard requirement for the pending requirement.

11. A non-transitory computer-readable recording medium storing a computer program for causing a computer to execute:
collating operation data indicating operation of a control system in operation with each standard requirement indicated by standard requirement information which is information indicating a standard requirement to be satisfied by the control system and specifying a pending requirement for which a determination of compliance with the standard requirement is to be deferred;
acquiring, from a pre-defined information source related to the pending requirement, additional information which is information that satisfies a requirement defined as potentially necessary to resolve the pending requirement; and
determining, based on the additional information, the compliance with the standard requirement for the pending requirement.
